# EUROPEAN PATENT APPLICATION

(11) **EP 4 333 163 A2**
(43) Date of publication of application: **06.03.2024**
(21) Application number: 23194133.7
(22) Date of filing: 30.08.2023
(51) Int. Cl.: H01M 10/625, H01M 50/417, H01M 50/426, H01M 50/434, H01M 50/446, H01M 50/451, H01M 50/457, H01M 10/42

(54) **BATTERY CELL, BATTERY MODULE, BATTERY PACK, ENERGY STORAGE SYSTEM, AND ELECTRIC VEHICLE**

(30) Priority: 30.08.2022 CN 202211051051
(71) Applicant: Huawei Digital Power Technologies Co., Ltd., Shenzhen, Guangdong 518043 (CN)
(72) Inventor: YANG, Jinxing, Shenzhen, Guangdong, 518043 (CN); ZHANG, Yezheng, Shenzhen, Guangdong, 518043 (CN); ZHANG, Liangyu, Shenzhen, Guangdong, 518043 (CN)
(74) Representative: Isarpatent

(57) **Abstract**

This application discloses a battery cell, a battery module, a battery pack, an energy storage system, and an electric vehicle. An electrochemical cell includes a positive electrode plate, a negative electrode plate, and at least three separators located between the positive electrode plate and the negative electrode plate. A first separator located at the middle among the at least three separators is a conductive layer. A second separator located between the positive electrode plate and the first separator and a third separator located between the negative electrode plate and the first separator are insulation layers. The first separator is connected to a communication chip. When the positive electrode plate pierces the second separator and reaches the first separator, or the negative electrode plate pierces the third separator and reaches the first separator, an internal short circuit of the electrochemical cell may be caused. The communication chip may receive, in time, an electrical signal sent by the first separator, and report fault information to a battery management unit, so that safety in use of a battery is improved.

## Description

### TECHNICAL FIELD

This application relates to the field of energy storage device technologies, and in particular, to a battery cell, a battery module, a battery pack, an energy storage system, and an electric vehicle.

### BACKGROUND

Lithium-ion batteries are widely used in products such as household energy storage, communication base stations, data centers, industrial and commercial energy storage, consumer electronics, and vehicles due to features of lithium-ion batteries such as high energy density, a long service life, a low self-discharge rate, and no memory effect. However, safety accidents of lithium-ion batteries are often reported, and safety problems of lithium-ion batteries seriously threaten life and property safety of users.

A defect in a battery manufacturing process, and overcharge, overdischarge, high-rate charging, and the like in a use process may cause lithium dendrites or copper dendrites. These all may pierce a separator of a battery, and consequently cause an internal short circuit of the battery, causing thermal runaway. In another aspect, if a collision accident happens to an electric vehicle, a battery may mechanically deform, and consequently an internal short circuit is caused, causing fires and explosions of the battery. Therefore, detecting the internal short circuit in time and performing safety processing on the battery to avoid fires and explosions of the battery are of great practical significance for the use of lithium-ion batteries.

### SUMMARY

This application provides a battery cell, a battery module, a battery pack, an energy storage system, and an electric vehicle, to detect an internal short circuit of an electrochemical cell in time, and improve safety in use of a battery.

According to a first aspect, a battery pack is provided. A battery cell (11) includes a casing, and an electrochemical cell (300, 700, 800) and a communication chip (504) that are located in the casing. The electrochemical cell (300, 700, 800) includes a positive electrode plate (301, 701, 801), a negative electrode plate (302, 702, 802), and at least three separators (303, 703, 803) located between the positive electrode plate (301, 701, 801) and the negative electrode plate (302, 702, 802). The at least three separators (303, 703, 803) include a first separator, a second separator, and a third separator. The first separator is located between the second separator and the third separator. The second separator is located between the positive electrode plate (301, 701, 801) and the first separator. The third separator is located between the first separator and the negative electrode plate (302, 702, 802). The first separator is a conductive layer. The second separator and the third separator are insulation layers. The first separator is connected to the communication chip (504). When the positive electrode plate (301, 701, 801) pierces the second separator and reaches the first separator, and consequently an electric potential difference between the positive electrode plate (301, 701, 801) and the first separator decreases to less than or equal to a first threshold; or when the negative electrode plate (302, 702, 802) pierces the third separator and reaches the first separator, and consequently an electric potential difference between the negative electrode plate (302, 702, 802) and the first separator decreases to less than or equal to a first threshold, the communication chip (504) is configured to report first fault information to a battery management unit after receiving a first electrical signal sent by the first separator.

In this aspect, when the positive electrode plate pierces the second separator and reaches the first separator, or the negative electrode plate pierces the third separator and reaches the first separator, an internal short circuit of the electrochemical cell may be caused. The communication chip may receive, in time, an electrical signal sent by the first separator, and report fault information to the battery management unit, so that safety in use of a battery is improved.

For example, the at least three separators refer to three or more separators. A separator at the middle among the three or more separators is a conductive separator. The remaining separators in the three or more separators, other than the conductive separator, are insulation separators.

In a possible implementation, the first separator is any one of the following: a conductive polymer, a carbon thin film, a conductive oxide, and graphene.

In another possible implementation, the conductive polymer is at least one of the following polymers or a copolymer of at least two of the following polymers: polyacetylene, polyparaphenylene, polypyrrole, polyaniline, polythiophene, polyfuran, and polyparaphenylene sulfide.

In another possible implementation, the carbon thin film is any one of the following or a mixture of a plurality of the following: a porous carbon paper, a carbon fiber, a graphene layer, a carbon nanotube, a carbon nanowire, and activated carbon.

In another possible implementation, the conductive oxide is any one of the following or a mixture of a plurality of the following: an indium tin oxide, an antimony tin oxide, and an aluminum zinc oxide.

In another possible implementation, the second separator or the third separator is any one of the following: a non-conductive polymer, a ceramic separator, a non-woven fabric, and a fiber separator.

In another possible implementation, the non-conductive polymer is at least one of the following polymers or a copolymer of at least two of the following polymers: polypropylene, polyvinylidene difluoride, polyethylene, polymethyl methacrylate, and polyvinyl acetate.

In another possible implementation, the electrochemical cell further includes a sensor (503). The sensor (503) is fastened on a surface of the positive electrode plate (301, 701, 801) and/or a surface of the negative electrode plate (302, 702, 802). The sensor (503) is connected to the communication chip (504). The sensor (503) is configured to send a second electrical signal to the communication chip (504) when detecting that a temperature and/or a pressure in the electrochemical cell is greater than or equal to a second threshold. The communication chip (504) is configured to report second fault information to the battery management unit after receiving the second electrical signal.

In this implementation, whether the temperature and/or the pressure in the electrochemical cell is abnormal may be detected by disposing the sensor in the electrochemical cell, so that fault information is reported in time, and safety in use of a battery is improved.

For example, the positive electrode plate (301, 701, 801) may be a surface that is of the positive electrode plate (301, 701, 801) and that is coated with an active substance, and the surface of the negative electrode plate (302, 702, 802) may be a surface that is of the negative electrode plate (302, 702, 802) and that is coated with the active substance.

For example, a surface that is of the positive electrode plate (301, 701, 801) and that is close to the second separator may be coated with the active substance, and/or a surface that is of the positive electrode plate (301, 701, 801) and that is away from the second separator may be coated with the active substance. If the surface that is of the positive electrode plate (301, 701, 801) and that is close to the second separator is coated with the active substance, the sensor (503) is fastened on the surface that is of the positive electrode plate (301, 701, 801) and that is close to the second separator. If the surface that is of the positive electrode plate (301, 701, 801) and that is away from the second separator is coated with the active substance, the sensor (503) is fastened on the surface that is of the positive electrode plate (301, 701, 801) and that is away from the second separator.

For example, a surface that is of the negative electrode plate (302, 702, 802) and that is close to the third separator may be coated with the active substance, and/or a surface that is of the negative electrode plate (302, 702, 802) and that is away from the third separator may be coated with the active substance. If the surface that is of the negative electrode plate (302, 702, 802) and that is close to the third separator is coated with the active substance, the sensor (503) is fastened on the surface that is of the negative electrode plate (302, 702, 802) and that is close to the third separator. If the surface that is of the negative electrode plate (302, 702, 802) and that is away from the third separator is coated with the active substance, the sensor (503) is fastened on the surface that is of the negative electrode plate (302, 702, 802) and that is away from the third separator.

For example, a position, at which the sensor is fastened, on the positive electrode plate (301, 701, 801) and/or the negative electrode plate (302, 702, 802) is not coated with the foregoing active substance.

In another possible implementation, the sensor (503) is a thin film-type sensor.

In another possible implementation, the sensor (503) is bonded to the surface of the positive electrode plate (301, 701, 801) and/or the surface of the negative electrode plate (302, 702, 802), or the sensor (503) is deposited onto the surface of the positive electrode plate (301, 701, 801) and/or the surface of the negative electrode plate (302, 702, 802) through magnetron sputtering.

In this implementation, the sensor is fastened on the surface of the positive electrode plate and/or the surface of the negative electrode plate, and does not cause damage to a general structure, a size, and a thickness of the electrochemical cell, so that the electrochemical cell including a built-in sensor can maintain performance such as a rate and a cycle of a normal electrochemical cell.

In another possible implementation, the sensor (503) is embedded in the surface of the positive electrode plate (301, 701, 801) and/or the surface of the negative electrode plate (302, 702, 802).

In this implementation, the sensor may be embedded in the surface of the positive electrode plate and/or the surface of the negative electrode plate, and the implementation is simple.

In another possible implementation, the sensor (503) is fastened on the positive electrode plate (301, 701, 801) and/or an edge position or a middle position of the surface of the negative electrode plate (302, 702, 802).

For example, if the sensor (503) is fastened on one positive electrode plate or one negative electrode plate, or on a plurality of positive electrode plates or the middle position of the surface of the negative electrode plate, a size of the sensor (503) in a vertical axis direction needs to be less than a size of the surface of the positive electrode plate and/or the surface of the negative electrode plate in the vertical axis direction.

If the sensor (503) is fastened on one positive electrode plate or one negative electrode plate, or on a plurality of positive electrode plates or the edge position of the surface of the negative electrode plate, a size of the sensor (503) in a vertical axis direction may be less than or equal to a size of the surface of the positive electrode plate and/or the surface of the negative electrode plate in the vertical axis direction.

In another possible implementation, the electrochemical cell is formed by stacking at least one positive electrode plate (301, 701, 801), at least one negative electrode plate (302, 702, 802), and the at least three separators (303, 703, 803).

In another possible implementation, the electrochemical cell is formed by winding the positive electrode plate (301, 701, 801), the negative electrode plate (302, 702, 802), and the at least three separators (303, 703, 803).

For example, a shape of a wound electrochemical cell may be a square, a circle, and the like.

For example, the foregoing bare electrochemical cell formed by stacking or winding undergoes baking, liquid injection, standing still, formation, aging, sealing, and capacity testing, so that preparation of a lithium-ion battery including a built-in sensor is completed.

According to a second aspect, a battery module is provided. The battery module (1) includes a battery management unit and a plurality of battery cells (11) according to any one of the first aspect or the implementations of the first aspect. The plurality of battery cells (11) are connected in series/parallel.

For example, the plurality of battery cells (11) may be connected in series; or the plurality of battery cells (11) may be connected in parallel; or the plurality of battery cells (11) may be first connected in series and then connected in parallel; or the plurality of battery cells (11) may be first connected in parallel and then connected in series.

According to a third aspect, a battery pack is provided. The battery pack includes a plurality of battery modules (1). Each battery module (1) of the plurality of battery modules (1) includes a battery management unit and a plurality of battery cells (11) according to any one of the first aspect or the implementations of the first aspect. The plurality of battery cells (11) are connected in series/parallel.

According to a fourth aspect, an energy storage system is provided and includes a converter and at least one battery pack according to the third aspect. The converter is connected to the battery pack and is configured to convert a current input into the battery pack or a current output from the battery pack.

According to a fifth aspect, an electric vehicle is provided and includes a motor, wheels, and the energy storage system according to the fourth aspect that is electrically connected to the motor. The energy storage system is configured to provide electric energy to the motor.

### BRIEF DESCRIPTION OF DRAWINGS

FIG. 1 is a schematic diagram of a structure of a battery module in a battery pack according to an embodiment of this application;
FIG. 2 is a main sectional view of an existing battery cell;
FIG. 3 is a schematic diagram of manufacturing a bare electrochemical cell of a stacked battery according to an embodiment of this application;
FIG. 4 is a schematic diagram of a three-layer separator according to an embodiment of this application;
FIG. 5 is a schematic diagram of a structure of an electrochemical cell according to an embodiment of this application;
FIG. 6 is a schematic diagram of a structure of a thin film-type sensor according to an embodiment of this application;
FIG. 7 is a schematic diagram of manufacturing a bare electrochemical cell that is of a stacked battery and that includes a sensor according to an embodiment of this application; and
FIG. 8 is a schematic diagram of manufacturing a bare electrochemical cell that is of a wound battery and that includes a sensor according to an embodiment of this application.

### Reference numerals:

300: Electrochemical cell; 301: Positive electrode plate; 302: Negative electrode plate; 303: Three separators; 3011: Positive electrode tab; 3021: Negative electrode tab; 501: Casing; 502: Electrochemical cell; 503: Sensor; 504: Communication chip; 5011: Negative electrode pole; 5012: Positive electrode pole; 5021: Negative electrode tab; 5022: Positive electrode tab; 505: Battery management unit; 700: Electrochemical cell; 701: Positive electrode plate; 702: Negative electrode plate; 703: At least three separators; 704a, 704b, 704c: Positions for fastening a sensor; 800: Electrochemical cell; 801: Positive electrode plate; 802: Negative electrode plate; 803: At least three separators; and 804a, 804b, 804c: Positions for fastening a sensor

### DESCRIPTION OF EMBODIMENTS

In recent years, with improvement of people's living standards and environmental protection awareness, people have realized that energy is an issue worthy of attention. In consideration of energies and environments, electric vehicles have been rapidly developed under the promotion of governments and automobile manufacturers. Pure electric vehicles are considered as an important development direction of electric vehicles because pure electric vehicles truly realize "zero discharge". Lithium-ion batteries have become an ideal power source for a new generation of electric vehicles due to excellent performance of lithium-ion batteries. Lithium-ion batteries are featured by light weight, large energy storage, large power, no pollution, no secondary pollution, a long service life, a small self-discharge coefficient, and a wide temperature adaption range, and are ideal vehicle batteries for electric bicycles, electric motorcycles, electric cars, electric trucks, and the like.

A lithium-ion battery is a chemical energy storage component. A positive electrode is a lithium-containing compound, and a negative electrode is lithium-intercalatable graphite. The positive electrode and the negative electrode are both immersed in a lithium-containing organic solvent. In storage and use processes, side reactions continuously occur between the positive electrode and an electrolyte, and between the negative electrode and the electrolyte, to generate gas. The side reactions are relative to normal reactions that are required for working of the battery and that are between the positive electrode and the electrolyte, and between the negative electrode and the electrolyte. In addition, each component of the lithium-ion battery easily reacts with water, so as to be deteriorated. Therefore, the interior of the lithium-ion battery is a sealed cavity that isolates moisture. Therefore, with continuous accumulation of internal gas of the lithium-ion battery, an internal interface of the lithium-ion battery and a cavity that accommodates a lithium-ion electrode deform, and finally the cavity of the lithium-ion battery may be cracked. To alleviate a problem caused by deformation of the cavity of the lithium-ion battery, a pressure relief opening may be disposed on a surface of the lithium-ion battery and is collectively referred to as an explosion-proof valve in the industry. When an internal pressure of the lithium-ion battery reaches a threshold, the explosion-proof valve is activated to create a crack on the surface of the cavity, to release gas in the cavity, and to reduce an explosion risk of the cavity of the lithium-ion battery.

The explosion-proof valve is generally turned on at the end of the service life of the lithium-ion battery or when an internal abnormal reaction of the battery is generated. After the explosion-proof valve is turned on, the electrolyte of the lithium-ion battery reacts with water in an external environment. A process of electrolyte deterioration is accompanied with heat generation. Therefore, after the explosion-proof valve is turned on, the lithium-ion battery has a safety risk, and turning on of the explosion-proof valve needs to be monitored.

The following describes implementations of this application by using specific embodiments. A person skilled in the art may easily learn of other advantages and effects of this application based on content disclosed in this specification. Although this application is described with reference to a preferred embodiment, it does not mean that a feature of this application is limited only to this implementation. On the contrary, a purpose of describing this application with reference to an implementation is to cover another option or modification that may be derived based on the claims of this application. To provide an in-depth understanding of this application, the following descriptions include a plurality of specific details. This application may alternatively be implemented without using these details. In addition, to avoid confusion or blurring a focus of this application, some specific details are omitted from the descriptions. It should be noted that, when there is no conflict, embodiments in this application and the features in embodiments may be mutually combined.

In the following, if the terms are used, the terms "first", "second", and the like are merely intended for a purpose of description, and shall not be understood as an indication or implication of relative importance or an implicit indication of a quantity of indicated technical features. Therefore, a feature limited by "first", "second", or the like may explicitly or implicitly include one or more features. In descriptions of this application, unless otherwise specified, "a plurality of means two or more than two. Orientation terms such as "up", "down", "left", and "right" are defined relative to orientations in which components are schematically placed in the accompanying drawings. It should be understood that these directional terms are relative concepts and are used for relative descriptions and clarifications. These directional terms may vary accordingly based on changes of the orientations in which the components are placed in the accompanying drawings.

In this application, that a structure is approximately in a specific shape means that the structure is generally in the shape from a macro perspective, and may be partially adjusted. For example, that the structure is approximately square may be understood as that a shape in which one side is in an arc shape rather than a linear shape is also included in the range. That one feature is approximately coaxial with another feature may be understood as that a distance between axes of the two features does not exceed 20% of a size of any feature perpendicular to the axis.

In this application, if the term is used, unless otherwise explicitly specified and limited, the term "connection" should be understood in a broad sense. For example, "connection" may be a fastened connection, a detachable connection, or an integrated connection; or may be a direct connection or an indirect connection by using an intermediate medium. The term "and/or" used in this specification includes any and all combinations of one or more related listed items.

When the following embodiments are described in detail with reference to schematic diagrams, for ease of description, a diagram indicating a partial structure of a device is partially enlarged not based on a general scale. In addition, the schematic diagrams are merely examples, and should not limit the protection scope of this application herein.

To make the objectives, technical solutions, and advantages of this application clearer, the following further describes implementations of this application in detail with reference to the accompanying drawings.

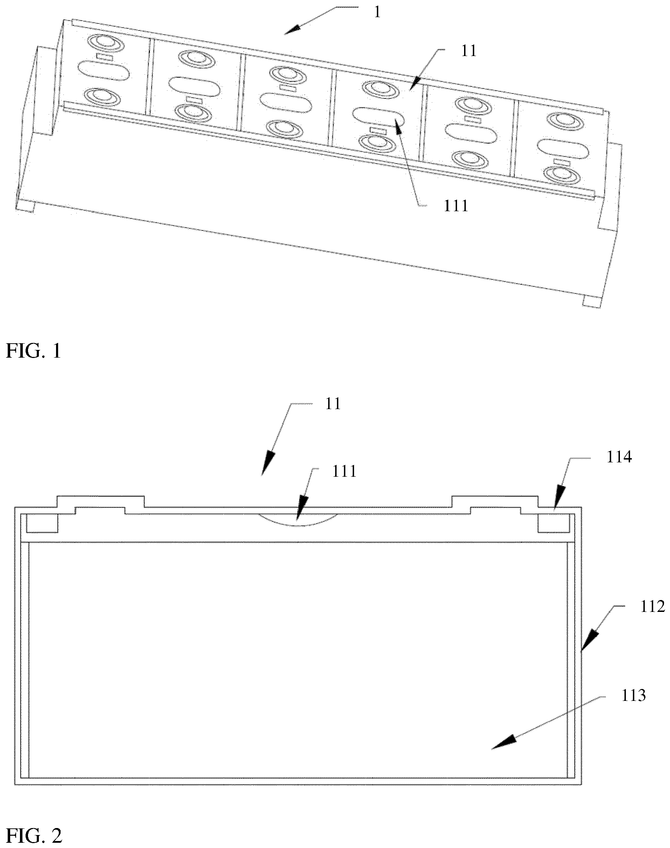

FIG. 1 is a schematic diagram of a structure of a battery module in a battery pack according to an embodiment of this application. The battery pack includes a plurality of battery modules. Each battery module 1 of the plurality of battery modules includes battery cells 11. Shapes of the plurality of battery cells 11 may be the same. The plurality of battery cells 11 may be connected in series or in parallel. The battery cells 11 in the battery module 1 may be arranged in a stacked manner, for example, in a sequentially stacked manner. Further, side plates may be further placed at two sides of the battery cells 11, so that the battery cells 11 are arranged neatly, and mechanical strength of a module in a stacking direction of the battery cells 11 is ensured. A bottom plate may be placed at the bottom of the battery cells 11 to support the battery cells 11. In addition, a battery module fastening apparatus may further be mounted at the bottom of the battery cells 11, so that at least one battery module 1 is fastened on the bottom plate. A pre-tightening force is applied to an end plate of the battery module 1 to press the battery and maintain the pre-tightening force to be connected to the side plates and the bottom plate. The connection manner may be riveting, welding, or the like. A top cover is provided at the top of the battery module 1 and seals a module connection cable.

An explosion-proof valve 111 may further be disposed on at least one battery cell 11. In storage and use processes of the battery cell 11, side reactions continuously occur between a positive electrode and an electrolyte, and between a negative electrode and the electrolyte, to generate gas. Therefore, with continuous accumulation of internal gas of the battery cell 11, when an internal pressure of the battery cell 11 reaches a threshold, the explosion-proof valve 111 is activated to create a crack on a surface of a cavity, to release gas in the cavity, and to reduce an explosion risk of the cavity of the battery.

The battery pack further includes a battery management unit (BMU) (not shown in the figure) which may also be referred to as a battery nanny or a battery housekeeper. The BMU is configured to manage the plurality of battery modules 1 of the battery pack, to prevent overcharge and overdischarge of the battery cell 11, prolong a service life of the battery cell 11, and monitor a status of the battery cell 11.

In this embodiment, the foregoing battery cell 11 may be a lithium-ion battery, a lead acid battery, a nickel cadmium battery, a nickel hydrogen battery, or the like.

FIG. 2 is a main sectional view of an existing battery cell. The battery cell 11 includes a casing 112 and an electrode assembly 113, and may further include a top cover assembly 114.

The casing 112 may be in a hexahedral shape or another shape. The shape of the casing 112 is not limited in this application. In addition, the shape of the casing 112 of each battery cell 11 may be the same or different. The casing 112 is provided with internal space for accommodating the electrode assembly 113 and an electrolyte. The casing 112 may be made of a material such as aluminum, an aluminum alloy, or plastic.

The electrode assembly 113 may be formed by winding a positive electrode plate, a negative electrode plate, and a separator together in a spiral manner around a winding axis, where the separator is an insulator between the positive electrode plate and the negative electrode plate. The electrode assembly 113 reacts with the electrolyte and then outputs electric energy.

The top cover assembly 114 covers an opening of the foregoing casing 112.

However, a disadvantage in a battery manufacturing process, and overcharge, overdischarge, high-rate charging, and the like in a use process may cause lithium dendrites or copper dendrites. These all may pierce the separator of a battery, and consequently cause an internal short circuit of the battery (where the positive electrode plate and the negative electrode plate are in contact with each other), causing thermal runaway. In another aspect, if a collision accident happens to an electric vehicle, a battery may mechanically deform, and consequently an internal short circuit is caused, causing fires and explosions of the battery. Therefore, detecting the internal short circuit in time and performing safety processing on the battery to avoid fires and explosions of the battery are of great practical significance for the use of lithium-ion batteries.

This application provides a battery cell, a battery module, a battery pack, an energy storage system, and an electric vehicle. The battery cell includes a casing, and an electrochemical cell and a communication chip that are located in the casing. The electrochemical cell includes a positive electrode plate, a negative electrode plate, and at least three separators located between the positive electrode plate and the negative electrode plate. A first separator located at the middle among the at least three separators is a conductive layer. A second separator that is connected to the positive electrode plate and a third separator that is connected to the negative electrode plate are insulation layers. The first separator is connected to the communication chip. When the positive electrode plate pierces the second separator and reaches the first separator, or the negative electrode plate pierces the third separator and reaches the first separator, the communication chip is configured to report first fault information to a battery management unit after receiving a first electrical signal sent by the first separator. In the solution of this application, when the positive electrode plate pierces the second separator and reaches the first separator, or the negative electrode plate pierces the third separator and reaches the first separator, an internal short circuit of the electrochemical cell may be caused. The communication chip may receive, in time, an electrical signal sent by the first separator, and report fault information to the battery management unit, so that safety in use of the battery is improved.

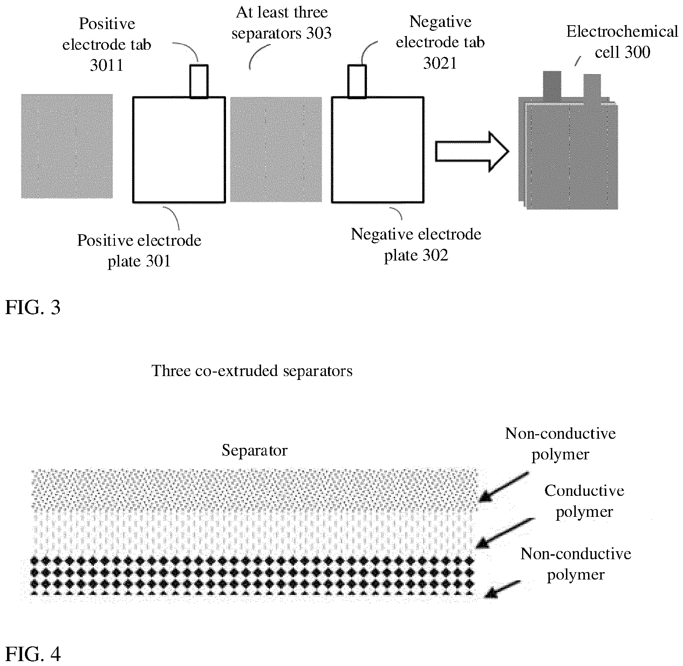

FIG. 3 is a schematic diagram of manufacturing a bare electrochemical cell of a stacked battery according to an embodiment of this application. A battery cell includes a casing (not shown in the figure), and an electrochemical cell 300 and a communication chip (not shown in the figure) that are located in the casing. The electrochemical cell 300 includes a positive electrode plate 301, a negative electrode plate 302, and at least three separators 303 located between the positive electrode plate 301 and the negative electrode plate 302. The at least three separators 303 include a first separator, a second separator, and a third separator. The first separator is located between the second separator and the third separator. The second separator is located between the positive electrode plate 301 and the first separator. The third separator is located between the first separator and the negative electrode plate 302. The first separator is a conductive layer. The second separator and the third separator are insulation layers. The first separator is connected to the communication chip.

The electrochemical cell 300 may be the foregoing electrode assembly 113.

For example, the at least three separators 303 refer to three or more separators. A separator at the middle among the three or more separators is a conductive separator. The remaining separators in the three or more separators, other than the conductive separator, are insulation separators.

If a burr or a metal particle exists in the positive electrode plate 301 or the negative electrode plate 302, or the battery mechanically deforms, when the positive electrode plate 301 pierces the second separator and reaches the first separator, and consequently an electric potential difference between the positive electrode plate 301 and the first separator decreases to less than or equal to a first threshold; or when the negative electrode plate 302 pierces the third separator and reaches the first separator, and consequently an electric potential difference between the negative electrode plate 302 and the first separator decreases to less than or equal to a first threshold, an internal short circuit of the electrochemical cell may be caused (where after the positive electrode plate 301 pierces the second separator and reaches the first separator, the positive electrode plate 301 may further pierce the third separator and be in contact with the negative electrode plate 302, causing the internal short circuit; or after the negative electrode plate 302 pierces the third separator and reaches the first separator, the negative electrode plate 302 may further pierce the second separator and be in contact with the positive electrode plate 301, causing the internal short circuit). When detecting that the electric potential difference between the positive electrode plate 301 and the first separator decreases to less than or equal to the first threshold, or the electric potential difference between the negative electrode plate 302 and the first separator decreases to less than or equal to the first threshold, the first separator sends an electrical signal to the communication chip. The communication chip is configured to report first fault information to a battery management unit after receiving the electrical signal sent by the first separator. In this case, the battery management unit may learn of a fault of the electrochemical cell in time, and perform safety processing on the battery, so that fires and explosions of the battery are avoided, and safety in use of the battery is improved.

The foregoing at least three separators 303 include the first separator, the second separator, and the third separator. The first separator is a conductive layer. The second separator and the third separator are insulation layers. The first separator is located between the second separator and the third separator. The second separator is located between the positive electrode plate 301 and the first separator. The third separator is located between the first separator and the negative electrode plate 302.

If the burr or the metal particle exists in the positive electrode plate 301, or the battery mechanically deforms, the positive electrode plate 301 pierces the second separator and reaches the first separator, and consequently the electric potential difference between the positive electrode plate 301 and the first separator decreases to less than or equal to the first threshold. The communication chip is configured to report the first fault information to the battery management unit after receiving the first electrical signal sent by the first separator.

If the burr or the metal particle exists in the negative electrode plate 302, or the battery mechanically deforms, the negative electrode plate 302 pierces the third separator and reaches the first separator, and consequently the electric potential difference between the negative electrode plate 302 and the first separator decreases to less than or equal to the first threshold. The communication chip is configured to report the first fault information to the battery management unit after receiving the first electrical signal sent by the first separator.

The foregoing first threshold may be obtained according to experience, experiments, or the like. For example, the first threshold is 0 V.

For example, the second separator is located between the positive electrode plate 301 and the first separator. The positive electrode plate 301 pierces the second separator and reaches the first separator, and consequently the electric potential difference between the positive electrode plate 301 and the first separator rapidly decreases to 0 V, causing the internal short circuit of the electrochemical cell. The communication chip is configured to report the first fault information to the battery management unit after receiving the first electrical signal sent by the first separator.

For example, the third separator is located between the negative electrode plate 302 and the first separator. The negative electrode plate 302 pierces the third separator and reaches the first separator, and consequently the electric potential difference between the negative electrode plate 302 and the first separator rapidly decreases to 0 V, causing the internal short circuit of the electrochemical cell. The communication chip is configured to report the first fault information to the battery management unit after receiving the first electrical signal sent by the first separator.

For example, the foregoing electrochemical cell 300 and the communication chip are packaged in the casing.

The positive electrode plate 301 in the electrochemical cell 300 is provided with a positive electrode tab 3011, and the negative electrode plate 302 is provided with a negative electrode tab 3021. A positive electrode pole and a negative electrode pole are disposed on the casing. The positive electrode tab 3011 on the positive electrode plate 301 is connected to the positive electrode pole on the casing, and the negative electrode tab 3021 on the negative electrode plate 302 is connected to the negative electrode pole on the casing.

For example, the foregoing positive electrode plate 301, at least three separators 303, and negative electrode plate 302 may be alternately stacked or wound to form the electrochemical cell.

The communication chip in the foregoing embodiment is integrated in the electrochemical cell, may be powered by using a battery, and may monitor, in real time, an electric potential between the positive electrode plate and the first separator and/or an electric potential between the negative electrode plate and the first separator. The communication chip may rapidly report a fault to the battery management unit provided that an internal short circuit occurs, or a change of an internal status is monitored.

The foregoing first separator is any one of the following: a conductive polymer, a carbon thin film, a conductive oxide, and graphene. The foregoing is merely an example, and a material of the first separator is not limited in this embodiment of this application.

The foregoing conductive polymer is at least one of the following polymers or a copolymer of at least two of the following polymers: polyacetylene, polyparaphenylene, polypyrrole, polyaniline, polythiophene, polyfuran, and polyparaphenylene sulfide. The foregoing is merely an example, and a material of the conductive polymer is not limited in this embodiment of this application.

The foregoing carbon thin film is any one of the following or a mixture of a plurality of the following: a porous carbon paper, a carbon fiber, a graphene layer, a carbon nanotube, a carbon nanowire, and activated carbon. The foregoing is merely an example, and a material of the carbon thin film is not limited in this embodiment of this application.

The foregoing conductive oxide is any one of the following or a mixture of a plurality of the following: an indium tin oxide, an antimony tin oxide, and an aluminum zinc oxide. The foregoing is merely an example, and a material of the conductive oxide is not limited in this embodiment of this application.

The second separator or the third separator is any one of the following: a non-conductive polymer, a ceramic separator, a non-woven fabric, and a fiber separator. The foregoing is merely an example, and materials of the second separator and the third separator are not limited in this embodiment of this application.

The foregoing non-conductive polymer is at least one of the following polymers or a copolymer of at least two of the following polymers: polypropylene, polyvinylidene difluoride, polyethylene, polymethyl methacrylate, and polyvinyl acetate. The foregoing is merely an example, and a material of the non-conductive polymer is not limited in this embodiment of this application.

FIG. 4 is a schematic diagram of a three-layer separator according to an embodiment of this application. A first separator is a conductive polymer, and a second separator and a third separator are both non-conductive polymers. A three-layer structure of the foregoing separator is porous, ensuring migration of lithium ions. First and third layers of non-conductive polymers ensure isolation of electrons and have a function of a normal separator.

In addition, that a pressure and a temperature in a battery cell exceed a normal value may also cause fire, explosion, or the like of a battery. Therefore, it is very important to monitor the pressure and temperature in the battery cell in real time.

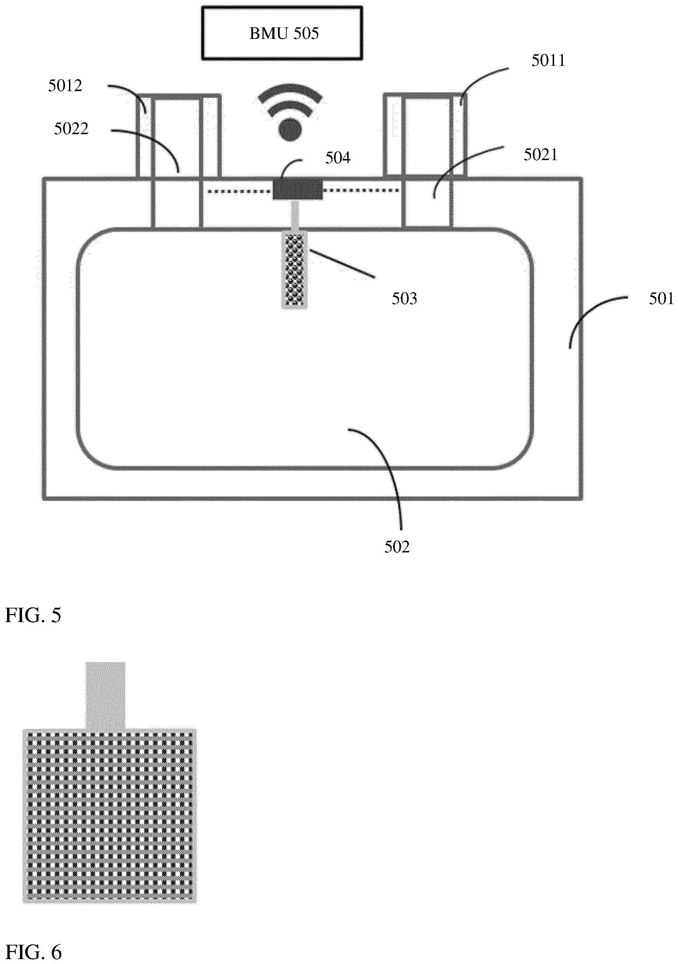

FIG. 5 is a schematic diagram of a structure of an electrochemical cell according to an embodiment of this application. A battery cell includes a casing 501, and an electrochemical cell 502 and a communication chip 504 that are located in the casing 501. The electrochemical cell 502 includes a positive electrode plate, a negative electrode plate, and at least three separators located between the positive electrode plate and the negative electrode plate. The electrochemical cell 502 further includes a sensor 503. The sensor 503 may be fastened on a surface of the positive electrode plate and/or a surface of the negative electrode plate. The sensor 503 may be connected to the communication chip 504 in a wired or wireless manner.

For example, the surface of the positive electrode plate may be a surface that is of the positive electrode plate and that is coated with an active substance, and the surface of the negative electrode plate may be a surface that is of the negative electrode plate and that is coated with the active substance.

For example, a surface that is of the positive electrode plate and that is close to a second separator may be coated with the active substance, and/or a surface that is of the positive electrode plate and that is away from a second separator may be coated with the active substance. If the surface that is of the positive electrode plate and that is close to the second separator is coated with the active substance, the sensor 503 is fastened on the surface that is of the positive electrode plate and that is close to the second separator. If the surface that is of the positive electrode plate and that is away from the second separator is coated with the active substance, the sensor 503 is fastened on the surface that is of the positive electrode plate and that is away from the second separator.

For example, a surface that is of the negative electrode plate and that is close to a third separator may be coated with the active substance, and/or a surface that is of the negative electrode plate and that is away from a third separator may be coated with the active substance. If the surface that is of the negative electrode plate and that is close to the third separator is coated with the active substance, the sensor 503 is fastened on the surface that is of the negative electrode plate and that is close to the third separator. If the surface that is of the negative electrode plate and that is away from the third separator is coated with the active substance, the sensor 503 is fastened on the surface that is of the negative electrode plate and that is away from the third separator.

For example, a position, at which the sensor is fastened, on the positive electrode plate and/or the negative electrode plate is not coated with the foregoing active substance.

The sensor 503 is configured to send a second electrical signal to the communication chip 504 when detecting that a temperature and/or a pressure in the electrochemical cell is greater than or equal to a second threshold.

The second threshold may be obtained according to experience or experimental data.

The communication chip 504 is configured to report second fault information to a battery management unit 505 after receiving the second electrical signal.

For example, the battery management unit 505 may determine a battery management policy based on the second electrical signal.

In FIG. 5, a positive electrode tab 5022 of the positive electrode plate in the electrochemical cell 502 is connected to a positive electrode pole 5012 on the casing 501, and a negative electrode tab 5021 of the negative electrode plate in the electrochemical cell 502 is connected to a negative electrode pole 5011 on the casing 501.

The foregoing sensor 503 may be an integrated sensor, for example, a temperature and pressure sensor, or may be two independent sensors: a temperature sensor and a pressure sensor.

The foregoing sensor 503 may be a thin film-type sensor. FIG. 6 is a schematic diagram of a structure of a thin film-type sensor according to an embodiment of this application. The thin film-type sensor is very thin, has a light weight, may work passively, and may be configured to detect a subtle signal. The thin film-type sensor is located in the electrochemical cell 502, and may accurately measure parameters in the electrochemical cell, such as a pressure and a temperature. In addition, because the thin film-type sensor is extremely thin, the thin film-type sensor does not cause damage to a general structure, a size, and a thickness of the electrochemical cell, so that the electrochemical cell including a built-in sensor can maintain performance such as a rate and a cycle of a normal electrochemical cell.

The communication chip in the foregoing embodiment is integrated in the electrochemical cell, and may be powered by using a battery. Specifically, the communication chip includes a power supply control circuit. The power supply control circuit is configured to connect or disconnect power supply to the sensor 503.

The communication chip may monitor the temperature and/or the pressure in the battery in real time. The communication chip may report a fault to the battery management unit in time provided that the temperature and/or the pressure exceeds a second threshold.

For example, the communication chip may include a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement a communication method by using a logic circuit or by executing code instructions. The transceiver apparatus may be a transceiver, a transceiver circuit, or an input/output interface, and is configured to receive a signal from another device other than the communication chip and transmit the signal to the processor, or send a signal from the processor to another device other than the communication chip. The transceiver apparatus may be a transceiver circuit or an input/output interface.

For example, the communication chip may include at least one processor and an interface. The at least one processor is coupled to a memory through the interface. When the at least one processor runs a computer program or instructions in the memory, the communication chip is enabled to perform the communication method. Optionally, the communication chip may include a chip, or may include a chip and another discrete device. This is not specifically limited in this embodiment of this application.

In the communication chip, a sending unit may be an output unit, for example, an output circuit or a communication interface. A receiving unit may be an input unit, for example, an input circuit or a communication interface.

During manufacturing of the electrochemical cell, in an implementation, the sensor 503 may be bonded to a surface of the positive electrode plate by using a binder, or bonded to a surface of the negative electrode plate by using a binder.

In another implementation, the sensor 503 may be deposited onto the surface of the positive electrode plate through magnetron sputtering, or may be deposited onto the surface of the negative electrode plate through magnetron sputtering. Magnetron sputtering is a kind of physical vapor deposition (PVD). A general sputtering method may be used to prepare a plurality of materials such as a metal, a semiconductor, and an insulator, and has advantages of having a simple device, being easy to control, having a large film coating area, having strong adhesion, and the like. A magnetron sputtering method achieves a high speed, a low temperature, and low damage. Because high-speed sputtering is performed under a low pressure, a gas ionization rate needs to be effectively improved. A magnetic field is introduced to a target cathode surface, so that magnetron sputtering uses a constraint of the magnetic field on a charged particle to increase a plasma density, to increase a sputtering rate.

In still another implementation, the sensor 503 may alternatively be embedded in the surface of the positive electrode plate, and/or the sensor 503 may alternatively be embedded in the surface of the negative electrode plate. The implementation of this manner is simple.

Manufacturing manners of the electrochemical cell include: stacking and winding.

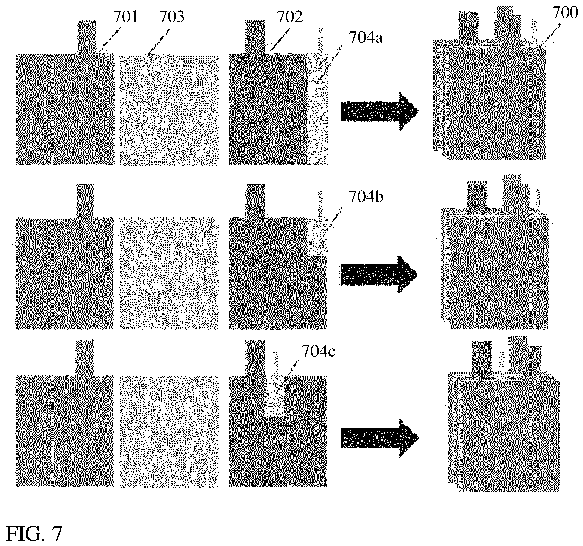

FIG. 7 is a schematic diagram of manufacturing a bare electrochemical cell that is of a stacked battery and that includes a sensor according to an embodiment of this application. The foregoing electrochemical cell 700 may be formed by stacking at least one positive electrode plate 701, at least one negative electrode plate 702, and at least three separators 703. Specifically, the electrochemical cell 700 may be formed by cyclically stacking one positive electrode plate 701, at least three separators 703, one negative electrode plate 702, another positive electrode plate 701, at least three separators 703, another negative electrode plate 702, and the like.

The foregoing sensor may be fastened on one positive electrode plate 701 or one negative electrode plate 702, or on a plurality of positive electrode plates 701 or edge positions 704a and 704b (as shown in the upper figure and the middle figure in FIG. 7) or a middle position 704c (as shown in the lower figure in FIG. 7) of a surface of the negative electrode plate 702 in the electrochemical cell 700. Specifically, a thin film-type sensor may be embedded in the surface of the positive electrode plate 701 or the surface of the negative electrode plate 702, or may be directly coated and deposited onto the surface of the positive electrode plate 701 or the surface of the negative electrode plate 702 through magnetron sputtering. Then, the positive electrode plate 701, the at least three separators 703, and the negative electrode plate 702 are stacked layer by layer to prepare a three-electrode bare electrochemical cell. The bare electrochemical cell is packaged in a battery casing, and undergoes baking, liquid injection, standing still, formation, aging, sealing, and capacity testing, so that preparation of a lithium-ion battery having a fault identification function is completed.

It should be noted that if the foregoing sensor is fastened on one positive electrode plate 701 or one negative electrode plate 702, or on the plurality of positive electrode plates 701 or the middle position 704c of the surface of the negative electrode plate 702, a size of the sensor in a vertical axis direction needs to be less than a size of the surface of the positive electrode plate and/or the surface of the negative electrode plate in the vertical axis direction.

If the foregoing sensor is fastened on one positive electrode plate 701 or one negative electrode plate 702, or on the plurality of positive electrode plates 701 or the edge positions 704a and 704b of the surface of the negative electrode plate 702, a size of the sensor in a vertical axis direction may be less than or equal to a size of the surface of the positive electrode plate and/or the surface of the negative electrode plate in the vertical axis direction.

The positive electrode plate in the battery pierces a second separator, or the negative electrode plate pierces a third separator and reaches a first separator. This may cause an internal short circuit of the electrochemical cell. A communication chip may receive, in time, an electrical signal sent by the first separator, and report fault information to a battery management unit, so that safety in use of the battery is improved.

In addition, whether a temperature and/or a pressure in the electrochemical cell is abnormal may be detected by disposing the sensor in the electrochemical cell, so that fault information is reported in time, and safety in use of the battery is improved.

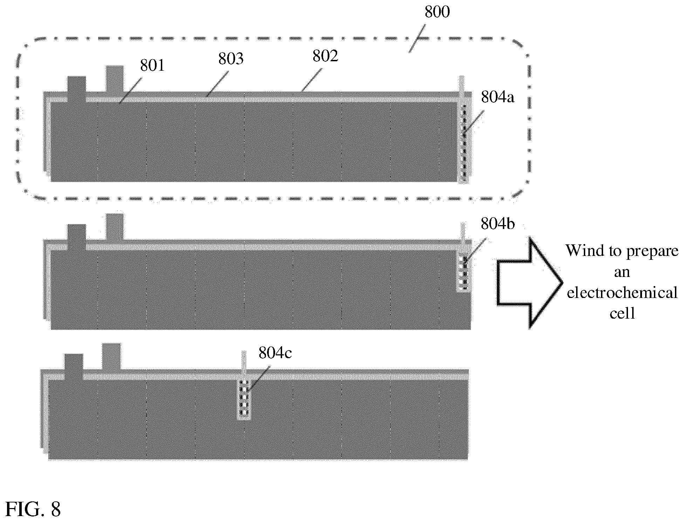

FIG. 8 is a schematic diagram of manufacturing a bare electrochemical cell that is of a wound battery and that includes a sensor according to an embodiment of this application. The foregoing electrochemical cell 800 may be formed by winding one positive electrode plate 801, one negative electrode plate 802, and at least three separators 803. For a wound electrochemical cell, as shown in FIG. 8, the sensor is fastened on two end positions 804a and 804b (the upper figure and the middle figure shown in FIG. 8) or a middle position 804c (the lower figure shown in FIG. 8) of the positive electrode plate 801 in the wound electrochemical cell. Specifically, a thin film-type sensor may be embedded in a surface of the positive electrode plate 801, or may be directly coated and deposited onto the surface of the positive electrode plate 801 through magnetron sputtering. Then, the positive electrode plate 801, the at least three separators 803, and the negative electrode plate 802 are wound to prepare a bare electrochemical cell including the sensor. The bare electrochemical cell including a built-in sensor is packaged in a battery casing, and undergoes baking, liquid injection, standing still, formation, aging, sealing, and capacity testing, so that preparation of a lithium-ion battery including a built-in sensor is completed.

Alternatively, the sensor is fastened on two end positions or a middle position of a surface of the negative electrode plate 802 in the wound electrochemical cell. Specifically, the thin film-type sensor is embedded in the surface of the negative electrode plate 802, or may be directly coated and deposited onto the surface of the negative electrode plate 802 through magnetron sputtering. Then, the positive electrode plate 801, the at least three separators 803, and the negative electrode plate 802 are wound to prepare the bare electrochemical cell including the sensor. The bare electrochemical cell including a built-in sensor is packaged in the battery casing, and undergoes baking, liquid injection, standing still, formation, aging, sealing, and capacity testing, so that preparation of the lithium-ion battery including the built-in sensor is completed.

Alternatively, the sensor is fastened on two end positions or a middle position of the surface of the positive electrode plate 801 and the surface of the negative electrode plate 802 in the wound electrochemical cell. Specifically, the thin film-type sensor is embedded in the surface of the positive electrode plate 801 and the surface of the negative electrode plate 802, or is directly coated and deposited onto the surface of the positive electrode plate 801 and the surface of the negative electrode plate 802 through magnetron sputtering. Then, the positive electrode plate 801, the at least three separators 803, and the negative electrode plate 802 are wound to prepare the bare electrochemical cell including the sensor. The bare electrochemical cell including a built-in sensor is packaged in the battery casing, and undergoes baking, liquid injection, standing still, formation, aging, sealing, and capacity testing, so that preparation of the lithium-ion battery including the built-in sensor is completed.

It should be noted that if the foregoing sensor is fastened on one positive electrode plate 701 or one negative electrode plate 702, or on the plurality of positive electrode plates 701 or the middle position 704c of the surface of the negative electrode plate 702, a size of the sensor in a vertical axis direction needs to be less than a size of the surface of the positive electrode plate and/or the surface of the negative electrode plate in the vertical axis direction.

If the foregoing sensor is fastened on one positive electrode plate 701 or one negative electrode plate 702, or on the plurality of positive electrode plates 701 or the edge positions 704a and 704b of the surface of the negative electrode plate 702, a size of the sensor in a vertical axis direction may be less than or equal to a size of the surface of the positive electrode plate and/or the surface of the negative electrode plate in the vertical axis direction. A shape of the wound electrochemical cell is not limited in this embodiment, and may be a square, a circle, or the like.

The positive electrode plate in the battery pierces a second separator, or the negative electrode plate pierces a third separator and reaches a first separator. This may cause an internal short circuit of the electrochemical cell. A communication chip may receive, in time, an electrical signal sent by the first separator, and report fault information to a battery management unit, so that safety in use of the battery is improved.

In addition, whether a temperature and/or a pressure in the electrochemical cell is abnormal may be detected by disposing the sensor in the electrochemical cell, so that fault information is reported in time, and safety in use of the battery is improved.

According to a battery pack provided in an embodiment of this application, a battery cell includes a casing, and an electrochemical cell and a communication chip that are located in the casing. The electrochemical cell includes a positive electrode plate, a negative electrode plate, and at least three separators located between the positive electrode plate and the negative electrode plate. A first separator located between a second separator and a third separator is a conductive layer. The second separator located between the positive electrode plate and the first separator, and the third separator located between the first separator and the negative electrode plate are insulation layers. The first separator is connected to the communication chip. When the positive electrode plate pierces the second separator and reaches the first separator, or the negative electrode plate pierces the third separator and reaches the first separator, the communication chip is configured to report first fault information to a battery management unit after receiving a first electrical signal sent by the first separator. In the solution of this application, when the positive electrode plate pierces the second separator and reaches the first separator, or the negative electrode plate pierces the third separator and reaches the first separator, an internal short circuit of the electrochemical cell may be caused. The communication chip may receive, in time, an electrical signal sent by the first separator, and report fault information to the battery management unit, so that safety in use of a battery is improved.

In addition, whether a temperature and/or a pressure in the electrochemical cell is abnormal may be detected by disposing a sensor in the electrochemical cell, so that the fault information is reported in time, and safety in use of the battery is improved.

The sensor is fastened on a surface of the positive electrode plate and/or a surface of the negative electrode plate, and does not cause damage to a general structure, a size, and a thickness of the electrochemical cell, so that the electrochemical cell including a built-in sensor can maintain performance such as a rate and a cycle of a normal electrochemical cell.

An embodiment of this application further provides an energy storage system. The energy storage system includes a converter and the foregoing battery pack. The converter is connected to the battery pack and is configured to convert a current input into the battery pack or a current output from the battery pack.

The energy storage system is usually used in household energy storage, site energy, electric vehicles, home energy storage, base station energy storage, data center backup energy storage, uninterruptible power supplies (UPSs), smart photovoltaic energy storage, energy storage stations, or the like.

An embodiment of this application further provides an electric vehicle. The electric vehicle may also be referred to as a new energy vehicle, and is a vehicle driven by using electric energy. The electric vehicle includes a motor, wheels, and the foregoing energy storage system that is electrically connected to the motor.

The energy storage system is a large-capacity high-power battery. The energy storage system may provide electric energy to the motor and/or another component of the electric vehicle. In some examples, the energy storage system may include one or more rechargeable lithium-ion or lead acid batteries. In addition, the energy storage system may alternatively use another battery material and configuration. This is not limited herein. When the electric vehicle travels, the energy storage system may supply power to the motor through a motor control unit (motor control unit, MCU) in a battery management system. The motor converts electric energy provided by the energy storage system to mechanical energy to drive the wheels to rotate, thereby implementing traveling of the electric vehicle.

In various embodiments of this application, unless otherwise specified or there is a logic conflict, terms and/or descriptions between different embodiments are consistent and may be mutually referenced, and technical features in different embodiments may be combined based on an internal logical relationship thereof, to form a new embodiment.

It should be noted that in descriptions of this application, unless otherwise specified, "/" represents an "or" relationship between associated objects. For example, A/B may represent A or B, where A and B may be singular or plural. Moreover, in the descriptions of this application, unless otherwise specified, "a plurality of" refers to two or more than two. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference. In addition, in embodiments of this application, the term such as "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the term such as "example" or "for example" is intended to present a related concept in a specific manner for ease of understanding.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

In the foregoing embodiments, the descriptions of each embodiment have respective focuses. For an edge part that is not described in detail in an embodiment, refer to related descriptions in another embodiment.

Components in the apparatus in embodiments of this application may be combined, divided, and deleted based on an actual requirement. A person skilled in the art may combine different embodiments or features of different embodiments described in this specification.

In various embodiments of this application, unless otherwise specified or there is a logic conflict, terms and/or descriptions between different embodiments are consistent and may be mutually referenced, and technical features in different embodiments may be combined based on an internal logical relationship thereof, to form a new embodiment.

Although this application is described herein with reference to embodiments, in a process of implementing this application that claims protection, a person skilled in the art may understand and implement other variations of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A battery cell, wherein the battery cell (11) comprises a casing, and an electrochemical cell (300, 700, 800) and a communication chip (504) that are located in the casing, the electrochemical cell (300, 700, 800) comprises a positive electrode plate (301, 701, 801), a negative electrode plate (302, 702, 802), and at least three separators (303, 703, 803) located between the positive electrode plate (301, 701, 801) and the negative electrode plate (302, 702, 802), the at least three separators (303, 703, 803) comprise a first separator, a second separator, and a third separator, the first separator is located between the second separator and the third separator, the second separator is located between the positive electrode plate (301, 701, 801) and the first separator, the third separator is located between the first separator and the negative electrode plate (302, 702, 802), the first separator is a conductive layer, the second separator and the third separator are insulation layers, and the first separator is connected to the communication chip (504); and
when the positive electrode plate (301, 701, 801) pierces the second separator and reaches the first separator, and consequently an electric potential difference between the positive electrode plate (301, 701, 801) (302, 702, 802) and the first separator decreases to less than or equal to a first threshold; or when the negative electrode plate (302, 702, 802) pierces the third separator and reaches the first separator, and consequently an electric potential difference between the negative electrode plate (302, 702, 802) and the first separator decreases to less than or equal to a first threshold, the communication chip (504) is configured to report first fault information to a battery management unit after receiving a first electrical signal sent by the first separator.

2. The battery cell according to claim 1, wherein the first separator is any one of the following: a conductive polymer, a carbon thin film, a conductive oxide, and graphene.

3. The battery cell according to claim 2, wherein the conductive polymer is at least one of the following polymers or a copolymer of at least two of the following polymers: polyacetylene, polyparaphenylene, polypyrrole, polyaniline, polythiophene, polyfuran, and polyparaphenylene sulfide.

4. The battery cell according to claim 1, wherein the second separator or the third separator is any one of the following: a non-conductive polymer, a ceramic separator, a non-woven fabric, and a fiber separator.

5. The battery cell according to claim 4, wherein the non-conductive polymer is at least one of the following polymers or a copolymer of at least two of the following polymers: polypropylene, polyvinylidene difluoride, polyethylene, polymethyl methacrylate, and polyvinyl acetate.

6. The battery cell according to any one of claims 1 to 5, wherein the electrochemical cell further comprises a sensor (503), the sensor (503) is fastened on a surface of the positive electrode plate (301, 701, 801) and/or a surface of the negative electrode plate (302, 702, 802), and the sensor (503) is connected to the communication chip (504);
the sensor (503) is configured to send a second electrical signal to the communication chip (504) when detecting that a temperature and/or a pressure in the electrochemical cell is greater than or equal to a second threshold; and
the communication chip (504) is configured to report second fault information to the battery management unit after receiving the second electrical signal.

7. The battery cell according to claim 6, wherein the sensor (503) is a thin film-type sensor.

8. The battery cell according to claim 6 or 7, wherein the sensor (503) is bonded to the surface of the positive electrode plate (301, 701, 801) and/or the surface of the negative electrode plate (302, 702, 802), or the sensor (503) isdeposited onto the surface of the positive electrode plate (301, 701, 801) and/or the surface of the negative electrode plate (302, 702, 802) through magnetron sputtering.

9. The battery cell according to claim 6 or 7, wherein the sensor (503) is embedded in the surface of the positive electrode plate (301, 701, 801) and/or the surface of the negative electrode plate (302, 702, 802).

10. The battery cell according to any one of claims 1 to 9, wherein the electrochemical cell is formed by stacking at least one positive electrode plate (301, 701, 801), at least one negative electrode plate (302, 702, 802), and the at least three separators (303, 703, 803).

11. The battery cell according to any one of claims 1 to 9, wherein the electrochemical cell is formed by winding the positive electrode plate (301, 701, 801), the negative electrode plate (302, 702, 802), and the at least three separators (303, 703, 803).

12. A battery module, wherein the battery module (1) comprises a battery management unit and a plurality of battery cells (11) according to any one of claims 1 to 11, and the plurality of battery cells (11) are connected in series/parallel.

13. A battery pack, wherein the battery pack comprises a plurality of battery modules (1), each battery module (1) of the plurality of battery modules (1) comprises a battery management unit and a plurality of battery cells (11) according to any one of claims 1 to 11, and the plurality of battery cells (11) are connected in series/parallel.

14. An energy storage system, comprising a converter and at least one battery pack according to claim 13,
wherein the converter is connected to the battery pack, and is configured to convert a current input into the battery pack or a current output from the battery pack.

15. An electric vehicle, comprising a motor, wheels, and the energy storage system according to claim 14 that is electrically connected to the motor, wherein the energy storage system is configured to provide electric energy to the motor.
